# EUROPÄISCHE PATENTSCHRIFT

(11) **EP 1 409 971 B1**
(45) Veröffentlichungstag und Bekanntmachung des Hinweises auf die Patenterteilung: **27.04.2005**
(21) Anmeldenummer: 02745403.2
(22) Anmeldetag: 24.06.2002
(51) Int. Cl.: G01G 23/48

(54) **WÄGEAUFNEHMER MIT PARALLELFÜHRUNG UND ECKLASTEINSTELLUNG**
WEIGH SENSOR WITH PARALLEL GUIDE AND CORNER LOAD REGULATION
CAPTEUR DE PESEE A GUIDAGE PARALLELE ET REGULATION DE CHARGE DE COIN

(30) Priorität: 27.06.2001 DE 10131062
(43) Veröffentlichungstag der Anmeldung: 21.04.2004
(73) Patentinhaber: SARTORIUS AG, 37075 Göttingen (DE)
(72) Erfinder: BIERICH, Eduard, 34346 Hann-Münden (DE); MARTENS, Jörg, Peter, 37120 Bovenden (DE); MAAZ, Günther, 37170 Uslar (DE)
(86) Internationale Anmeldenummer: PCT/EP2002/006943
(87) Internationale Veröffentlichungsnummer: WO 2003/002954

(56) Entgegenhaltungen:
- EP-A- 0 846 940
- DE-U- 9 216 006
- DE-U- 29 509 829
- CHR. U. VOLKMANN: "Hilfssensoren zur Messwertkorrektur bei Wägezellen" TECHNISCHES MESSEN TM., Bd. 53, Nr. 7/8, 1986, Seiten 293-298, XP002216750 R.OLDENBOURG VERLAG. MUNCHEN., DE ISSN: 0171-8096

## Beschreibung

Die Erfindung bezieht sich auf einen Wägeaufnehmer mit einem gehäusefesten Teil und mit einem Lastaufnehmer, der durch eine Parallelführung aus einem oberen Lenker und einem unteren Lenker beweglich mit dem gehäusefesten Teil verbunden ist.

Wägeaufnehmer dieser Art sind allgemein bekannt und beispielsweise in der DE 295 09 829 Ul beschrieben. Will man mit diesen Wägeaufnehmern Waagen hoher Auflösung (≥ 500 000 Schritte) aufbauen, so muss auch die Einstellung der Ecklastfreiheit - also die Unabhängigkeit der Anzeige der Waage vom Ort des Wägegutes auf der Waagschale - entsprechend feinfühlig und genau sein. Dazu ist es notwendig, den vertikalen Abstand des oberen und des unteren Lenkers auf beiden Seiten der Lenker genau zueinander zu justieren. In der DE 295 09 829 U1 ist dafür ein Ecklasteinstellhebel vorgesehen, der an seinem Ende durch eine Justierschraube verstellt werden kann. Dadurch wird die Justierbewegung an der Justierschraube entsprechend dem Hebelverhältnis heruntertransformiert und es wird eine dementsprechend feine Einstellung erreicht.

Aus der DE 92 16 006 Ul ist es außerdem bekannt, den Ecklasteinstellhebel durch die Kraft einer (einstellbaren) Feder geringfügig zu verbiegen und so eine zusätzliche Feinjustierung der Ecklastfreiheit zu erreichen.

Aus der DE 195 40 782 C1 ist es weiterhin bekannt, durch eine Spannschraube den gehäusefesten Bereich zwischen den Abstützpunkten des oberen und des unteren Lenkers verschieden stark unter einer Vorspannung zu halten und dadurch eine Feinjustierung des vertikalen Abstandes und damit eine Feinjustierung der Ecklastfreiheit zu erreichen.

Schließlich ist es aus der DE 34 22 042 C2 bekannt, die Gelenke an den Enden der Lenker durch Materialdünnstellen zu realisieren und die Ecklastfreiheit durch Materialabtrag an diesen Materialdünnstellen einzustellen.

Alle bekannten Lösungen haben jedoch den Nachteil, dass sie einen verstellenden Eingriff direkt am Wägeaufnehmer erfordern. Dazu muss im Allgemeinen das Gehäuse der Waage geöffnet werden, wodurch das thermische Gleichgewicht innerhalb der Waage und des Wägeaufnehmers gestört wird. Dadurch ist die Einstellung gerade der letzten Digit der Ecklastfreiheit sehr zeitraubend.

Aufgabe der Erfindung ist es daher, einen Wägeaufnehmer der eingangs genannten Art anzugeben, bei dem ohne mechanischen Eingriff die Ecklastfreiheit justiert werden kann.

Erfindungsgemäß wird dies dadurch gelöst, dass Heiz- oder Kühlelemente vorhanden sind, die die Temperatur am Lastaufnehmer und/oder am gehäusefesten Teil zwischen den Abstützpunkten des oberen und des unteren Lenkers gegenüber dem restlichen Wägeaufnehmer lokal verändern und so über den thermischen Ausdehnungskoeffizienten des Materials des Wägeaufnehmers den vertikalen Abstand zwischen oberem und unterem Lenker zur Ecklastjustierung geringfügig verändern.

### Vorteilhafte Ausgestaltungen ergeben sich aus den abhängigen Ansprüchen

Die Erfindung wird im Folgenden anhand der Figuren beschrieben. Dabei zeigt:
- Figur 1: eine schematische Darstellung des Wägeaufnehmers in Seitenansicht zur Erläuterung der Funktion,
- Figur 2: eine perspektivische Darstellung des Wägeaufnehmers in einer ersten Ausführungsform,
- Figur 3: den Wägeaufnehmer aus Figur 2 in Seitenansicht,
- Figur 4: eine perspektivische Darstellung des Wägeaufnehmers in einer zweiten Ausführungsform,
- Figur 5: eine perspektivische Darstellung des Wägeaufnehmers in einer dritten Ausführungsform und
- Figur 6: ein Blockschaltbild der Elektronik des Wägeaufnehmers.

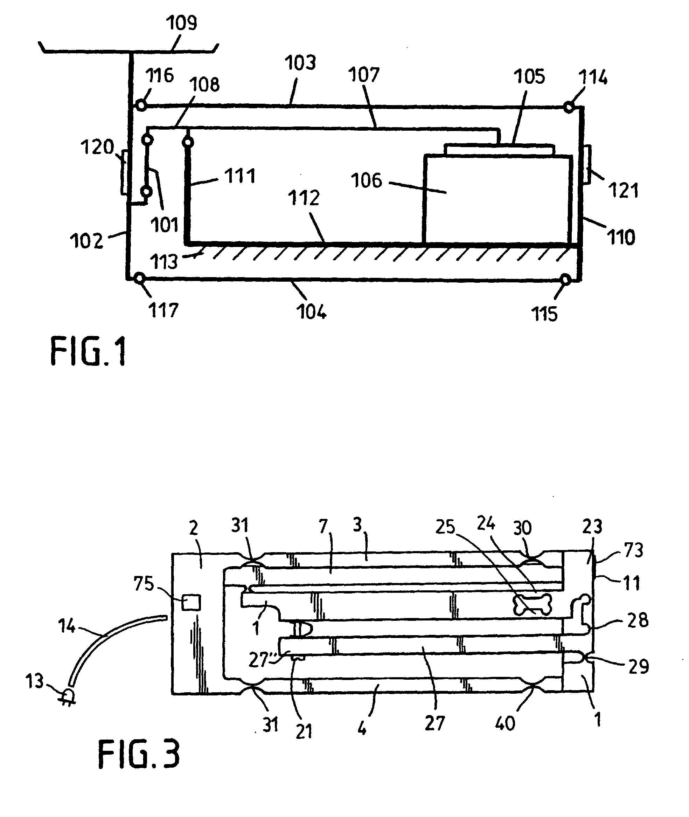

Die Figur 1 zeigt stark schematisiert den Wägeaufnehmer in Seitenansicht. Man erkennt einen gehäusefesten Bereich 110/111/112, der durch nicht dargestellte und nur durch die Schraffur 113 am Bereich 112 angedeutete Mittel mit dem Gehäuse der Waage verbunden ist. Über einen oberen Lenker 103 und einen unteren Lenker 104 ist ein Lastaufnehmer 102 gelenkig mit dem gehäusefesten Bereich 110 verbunden. Die Getenkstellen 114...117 an den Enden der Lenker sind schematisch durch Kreise angedeutet. Am Lastaufnehmer 102 ist die Waagschale 109 der Waage befestigt. Weiter ist in Figur 1 eine elektromagnetische Kraftkompensation mit Übersetzungshebel angedeutet: Der Übersetzungshebel 107/108 ist am gehäusefesten Bereich 111 gelagert; die vom Wägegut auf der Waagschale ausgeübte Kraft wird über den Lastaufnehmer 102 und ein Koppelement 101 auf den kürzeren Hebelarm 108 übertragen, am längeren Hebelarm 107 wird durch eine Spule 105 im Luftspalt eines Permanentmagnetsystems 106 die Kompensationskraft erzeugt. Die Gelenkstellen am Übersetzungshebel und am Koppelelement sind wieder durch Kreise angedeutet. Für die Ecklastfreiheit der Waage ist es nun notwendig, dass der vertikale Abstand der Gelenkstellen 114 und 115 und der vertikale Abstand der Gelenkstellen 116 und 117 genau zueinander justiert sind. Löst der Wägeaufnehmer z. B. 10⁶ Schritte auf, so muss diese Justierung des vertikalen Abstandes auf etwa 10⁻⁶ genau sein, die Anforderungen sind also erheblich.

Beim erfindungsgemäßen Wägeaufnehmer erfolgt die Grobjustierung der Ecklastfreiheit nach einem der üblichen Verfahren und ist in Figur 1 nicht dargestellt. Die Feinjustierung erfolgt durch Heiz- oder Kühlelemente, in Figur 1 realisiert durch zwei Heizwiderstände 120 und 121. Der Heizwiderstand 120 befindet sich am Lastaufnehmer 102, der Heizwiderstand 121 am gehäusefesten Teil 110 zwischen dem Abstützpunkt 114 des oberen Lenkers 103 und dem Abstützpunkt 115 des unteren Lenkers 104. Ist z. B. der vertikale Abstand der Abstützpunkte 116 und 117 der Lenker am Lastaufnehmer zu gering, so wird der Heizwiderstand 120 an eine elektrische Spannung gelegt, dadurch etwas Wärme erzeugt und so die Temperatur des Lastaufnehmers 102 etwas gegenüber der Temperatur des restlichen Wägeaufnehmers erhöht. Aufgrund der thermischen Ausdehnung des Materials des Wägeaufnehmers vergrößert sich dadurch der vertikale Abstand der Abstützpunkte 116 und 117.

Ist der Wägeaufnehmer z. B. aus Aluminium gefertigt, das einen thermischen Ausdehnungskoeffizienten von ca. 20 ppm/K hat, so führt eine Temperaturerhöhung am Lastaufnehmer von 0,5 K gegenüber dem restlichen Teil des Wägeaufnehmers zu einer Änderung des vertikalen Abstandes der Lenker um 10 ppm. Soll die Ecklastjustierung auf 1 ppm genau sein und soll der maximale Einstellbereich der thermischen Ecklastfeineinstellung 20 ppm betragen, so muss die Heizleistung des Heizwiderstandes 120 also maximal eine Übertemperatur von 1 K erzeugen können und auf besser als 5 % stabil sein. Die elektrischen Anforderungen sind also gering und die benötigte Heizleistung ebenfalls (≤ 100 mW bei üblichen Wägeaufnehmern).

Ist umgekehrt der vertikale Abstand der Abstützpunkte 116 und 117 zu groß gegenüber dem vertikalen Abstand der Abstützpunkte 114 und 115, so wird in Figur 1 der Heizwiderstand 121 an eine elektrische Spannung angelegt und dadurch der vertikale Abstand der Abstützpunkte 114 und 115 vergrößert. Durch die beiden Heizwiderstände 120 und 121 ist also eine Justierung in beiden Richtungen möglich.

Anhand von Figur 1 ist die Justierung der Ecklastfreiheit in der Richtung links/rechts in der Zeichenebene der Figur 1 erläutert worden. In gleicher Weise kann auch eine Justierung in der senkrecht zur Zeichenebene liegenden Richtung erfolgen. Dazu muss z. B. am gehäusefesten Bereich 110 der Widerstand 121 hinter der Zeichenebene angebracht sein und ein weiterer Widerstand vor der Zeichenebene. Durch Heizen des einen oder des anderen Widerstandes kann dann auch in der Richtung senkrecht zur Zeichenebene die Ecklast justiert werden.

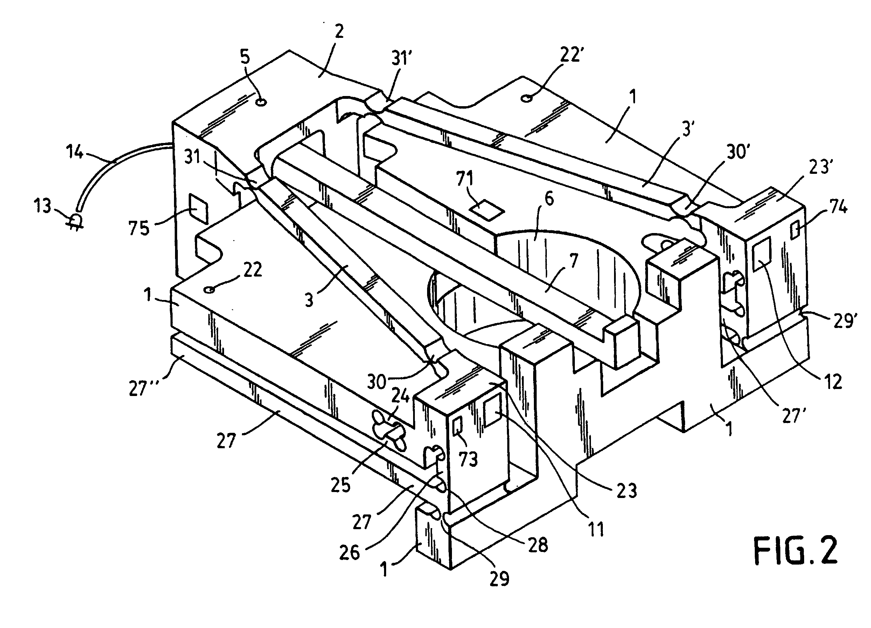

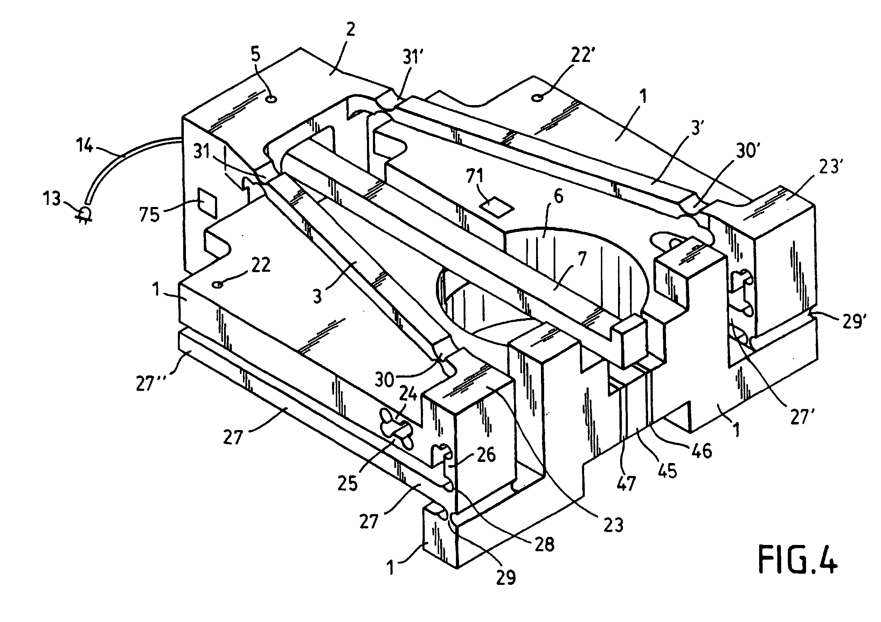

In den Figuren 2 und 3 ist nun ein wirklicher Wägeaufnehmer dargestellt; Figur 2 ist eine perspektivische Ansicht, Figur 3 ist eine Seitenansicht. Man erkennt den Bereich 1, der mit dem Gehäuse der Waage verbunden ist, weiter den Lastaufnehmer 2, der eine Befestigungsbohrung 5 für die nicht dargestellte Waagschale aufweist, den oberen Lenker, der in zwei Teillenker 3 und 3' aufgeteilt ist und den unteren Lenker, der ebenfalls in zwei Teillenker 4 und 4' aufgeteilt ist (der Teillenker 4' ist in Figur 3 hinter dem Teillenker 4 verborgen). Die Ecklastverstellung der Parallelführung aus den Lenkern 3/3' und 4/4' erfolgt einmal durch einen Ecklasteinstellhebel 27, der durch eine Getenkdünnstelle 29 am gehäusefesten Bereich 1 gelagert ist. Durch eine Schraube 21, die in einer Gewindebohrung 22 im gehäusefesten Bereich 1 steckt, kann der vordere Bereich 27" des Ecklasteinstellhebels 27 etwas bewegt werden und dadurch der ganze Ecklasteinstellhebel 27 etwas verkippt werden. Da die Dünnstellen 28 und 29 am Ecklasteinstellhebel 27 seitlich etwas gegeneinander versetzt sind, führt diese Verkippung des Ecklasteinstellhebels 27 zu einer sehr geringen vertikalen Bewegung des Bereiches 23, an dem der Teillenker 3 sich abstützt. Um ein Verkippen des Bereiches 23 zu verhindern, ist dieser durch eine Parallelführung aus den Lenkern 24 und 25 mit dem gehäusefesten Bereich 1 verbunden. Eine gleiche Ecklasiverstellung ist für den Bereich 23', an dem sich der andere obere Teillenker 3' abstützt, vorgesehen. Die sichtbaren Teile dieser zweiten Ecklastverstellung sind in den Figuren 2 und 3 mit den gleichen Bezugszahlen, jedoch mit einem Strich versehen, gekennzeichnet. Außerdem erkennt man in Figur 2 den Übersetzungshebel 7 und einen Durchbruch 6 für den Magneten der elektromagnetischen Kraftkompensation. - Alle diese Teile des Wägeaufnehmers sind allgemein bekannt und beispielsweise in der schon zitierten DE 295 09 829 Ul beschrieben, so dass sich eine detailliertere Beschreibung hier erübrigt.

Die Ecklastjustierung über den Ecklasteinstellhebel 27 bzw. 27' ist nur so feinfühlig, dass der vertikale Abstand des oberen Teillenkers 3 vom unteren Teillenker 4 bzw. der vertikale Abstand des oberen Teillenkers 3' vom unteren Teillenker 4' auf 0,4 µm genau eingestellt werden kann. Bei einem vertikalen Abstand der Lenker 3/3' und 4/4' von ca. 40 mm entspricht dies einer relativen Einstellgenauigkeit von 10 ppm. Ein Einstellung auf 1 ppm genau - also auf 0,04 µm - wird nun nicht durch mechanische Verstellung erreicht, sondern in der schon beschriebenen Weise durch Heizwiderstände 11 und 12, die elektrisch angesteuert werden und die beispielsweise die Form von Folienwiderständen haben können. Werden beide Heizwiderstände gleich angesteuert, erzeugen sie also die gleiche Übertemperatur im Bereich 23 und im Bereich 23', so wird die Ecklast in der Richtung des Übersetzungshebels 6 verändert (im Folgenden Ecklast vom/hinten genannt). Wird nur einer der Heizwiderstände angesteuert, so dehnen sich die Bereiche 23 und 23' verschieden aus und die Ecklast in der Richtung senkrecht zum Übersetzungshebel 6 ändert sich (im Folgenden Ecklast rechts/links genannt).

Am Lastaufnehmer 2 könnte(n) in entsprechender Weise ein bzw. zwei Heizwiderstände angebracht sein. Dies würde jedoch elektrische Verbindungsleitungen zum beweglichen Lastaufnehmer erfordern, die die Gefahr einer Verfälschung des Wägeergebnisses in sich bergen. Zur berührungslosen Erwärmung des Lastaufnehmers 2 ist daher in Figur 2 und 3 eine Lichtquelle 13 - beispielsweise eine Leuchtdiode ― vorgesehen, deren Strahlungsenergie über einen Lichtwellenleiter 14, der dicht vor dem Lastaufnehmer 2 endet, auf den Lastaufnehmer 2 übertragen wird. Der Lastaufnehmer 2 weist dazu in seinem in Figur 3 linken Bereich eine dunkle, stark absorbierende Beschichtung auf. Durch mehr oder weniger große Ansteuerung der Lichtquelle 13 kann also die Aufheizung des Lastaufnehmers 2 genauso gesteuert werden wie bei einem Heizwiderstand. Bei Bedarf können auch zwei Lichtquellen und zwei Lichtwellenleiter den Lastaufnehmer 2 zum einen in der Nähe der Teillenker 3 und 4 und zum anderen in der Nähe der Teillenker 3' und 4' verschieden erwärmen, um so eine Ecklastjustierung in der Richtung rechts/links zu erreichen. Wegen der geringen Größe und wegen der kompakten Bauweise des Lastaufnehmers 2 ist dies Verfahren jedoch nicht so günstig, wie eine verschiedene Erwärmung der Bereiche 23 und 23', die deutlich weiter voneinander beabstandet sind und einen größeren Wärmewiderstand zwischen einander haben.

In Figur 4 ist nun eine zweite Ausführungsform eines Wägeaufnehmers in perspektivischer Darstellung gezeigt. Gleiche Teile wie in Figur 2 und 3 sind mit den gleichen Bezugszahlen gekennzeichnet und werden nicht noch mal erläutert. Dieser Wägeaufnehmer weist nun keine Heizwiderstände auf, sondern ein Peltierelement 45/46/47. Dieses Peltierelement weist zwei metallische Endplatten 46 und 47 auf und dazwischen den aktiven Halbleiter 45. Die Kontaktierungen sind der Übersichtlichkeit halber wieder nicht eingezeichnet. Je nach Richtung des Stromflusses transportiert das Peltierelement Wärme von der einen Endplatte zur anderen Endplatte oder umgekehrt. Die Endplatte 46 kühlt sich also z. B. ab, während die andere Endplatte 47 sich erwärmt. Dabei ist die Erwärmung der einen Endplatte - 47 im Beispiel - größer als die Abkühlung der anderen Endplatte - 46 im Beispiel - , da an der warmen Endplatte auch die von außen zugeführte elektrische Leistung auftritt. ― Durch eine Ansteuerung des Peltierelementes mit einem Gleichstrom kann also eine Temperaturdifferenz zwischen den Bereichen 23 und 23' erzeugt werden und damit eine Veränderung der Ecklast in Richtung links/rechts, wobei das Vorzeichen des Stromes das Vorzeichen der Ecklastveränderung bestimmt. Zusätzlich kann durch eine Wechselstromansteuerung des Peltierelementes abwechselnd auf jeder Seite eine Erwärmung und eine Abkühlung erzeugt werden, die sich wegen der thermischen Trägheit des Wägeaufnehmers aufheben, sodass unter dem Strich nur die zugeführte elektrische Leistung zu einer Erwärmung beider Seiten führt; dies ergibt eine Ecklastjustierung in der Richtung vorn/hinten. Bei einer Ansteuerung des Peltierelementes mit einem rechteckförmigen Wechselstrom mit variablem Tastverhältnis und variabler Amplitude kann also durch die Wahl des Tastverhältnisses und der Amplitude sowohl eine Ecklastjustierung rechts/links in beiden Richtungen als auch eine Ecklastjustierung vorn/hinten in einer Richtung erfolgen. Die Ecklastjustierung vorn/hinten in der anderen Richtung muss dann wieder durch das Erwärmen des Lastaufnehmers durch die Lichtquelle 13 erfolgen.

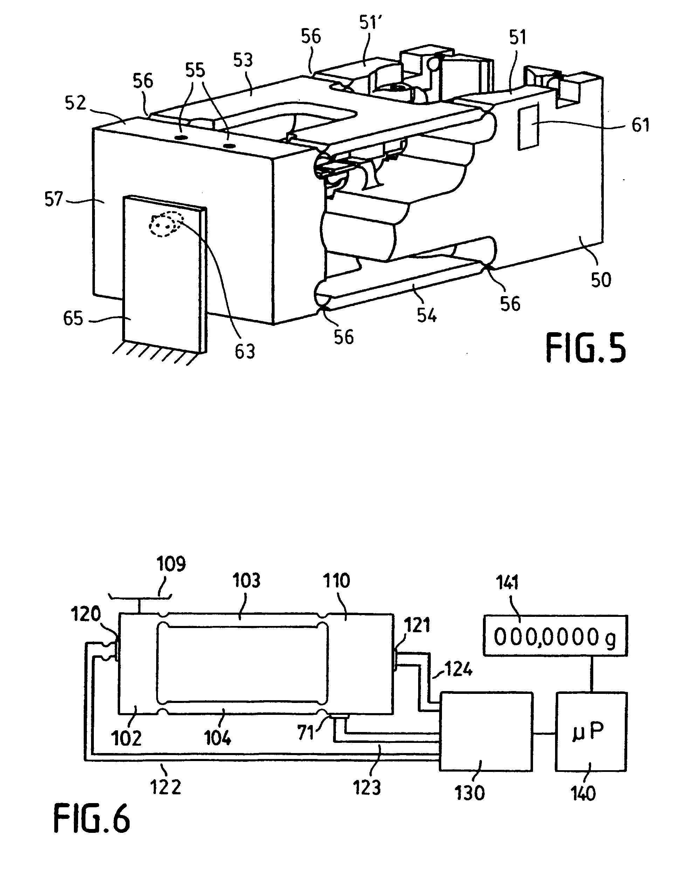

In Figur 5 ist eine dritte Ausführungsform des Wägeaufnehmers in einer perspektivischen Ansicht gezeigt. Man erkennt den gehäusefesten Bereich 50, den oberen Lenker 53, den unteren Lenker 54 und den Lastaufnehmer 52. Die Gelenkdünnstellen an den Enden der Lenker sind mit 56 bezeichnet. Am Lastaufnehmer 52 sind zwei Gewindelöcher 55 vorhanden zum Befestigen der (nicht gezeichneten) Waagschale der Waage. Im Raum zwischen den Lenker 53 und 54 sind mehrere Übersetzungshebel untergebracht, die im einzelnen in der schon zitierten DE 195 40 782 C1 beschrieben sind. Zwischen den beiden Säulen 51 und 51' erkennt man den Freiraum zum Einbau des Permanentmagneten der elektromagnetischen Kraftkompensation. Die normale Ecklastjustierung erfolgt durch geringen Materialabtrag an den Dünnstellen 56. Die Feinjustierung der Ecklast erfolgt wieder durch Heizen: Einmal durch zwei Heizwiderstände, von denen der eine Heizwiderstand 61 den Bereich an der Säule 51 heizt und der zweite, in Figur 5 nicht erkennbare Heizwiderstand den entsprechenden Bereich an der Säule 51'. Die Heizung des Lastaufnehmers 52 erfolgt wieder berührungslos durch Strahlungsheizung: Eine Leuchtdiode 63 auf einer Platine 65, die gehäusefest dicht vor der Frontseite 57 des Lastaufnehmers 52 montiert ist, überträgt die Energie optisch auf den Lastaufnehmer, wo sie in Wärme umgewandelt wird. Dazu ist die Frontseite 57 des Lastaufnehmers mit einer dunklen Absorptionsschicht bedeckt.

Die elektrischen Anschlüsse der Heiz- oder Kühlelemente sind bisher in den Figuren der Übersichtlichkeit halber weggelassen. In Figur 6 sind nun die elektrischen Anschlüsse und die Ansteuerung in einem Blockschaltbild gezeigt. Der mechanische Teil des Wägeaufnehmers ist mit den Bezugszahlen 102...109 genauso bezeichnet wie in Figur 1. Die Heizwiderstände 120 und 121 sind über elektrische Verbindungsleitungen 122 und 124 mit einer Steuereinheit 130 verbunden. In der Steuereinheit 130 sind Speichermittel vorhanden, in denen die Größe des Stromes bzw. der Spannung bzw. das Tastverhältnis für die jeweiligen Heizwiderstände bzw. für das Peltierelement abgespeichert sind. Diese Werte werden nach der Fertigung des Wägeaufnehmers und nach der mechanischen Grobjustierung der Ecklastfreiheit aufgrund des verbliebenen geringen Ecklastfehlers festgelegt und abgespeichert. Weist der Wägeaufnehmer einen Temperaturfühler 71 auf, dessen Lage im realen Wägeaufnehmer in Figur 2 eingezeichnet ist und der die mittlere Temperatur des Wägeaufnehmers und damit die Umgebungstemperatur misst, so kann dieses Temperatursignal ebenfalls der Steuereinheit 130 zugeführt werden (Verbindungen 123 in Figur 6). Die Steuereinheit kann dann z. B. die Größe des Stromes bzw. der Spannung bzw. das Tastverhältnis für die einzelnen Heiz- oder Kühlelemente in Abhängigkeit von der Umgebungstemperatur anpassen, falls der Wägeaufnehmer eine temperaturabhängige Ecklast aufweist. Die Steuereinheit kann die Größe des Stromes bzw. der Spannung bzw. das Tastverhältnis für die einzelnen Heiz- oder Kühlelemente beispielsweise auch zeitabhängig vorgeben. Dies ist z. B. dann sinnvoll, wenn der Wägeaufnehmer im kalten Zustand und im betriebswarmen Zustand eine verschiedene Ecklast aufweist. Dieser Unterschied kann dann korrigiert werden.

Die Steuereinheit 130 kann auch so ausgebildet sein, dass sie die Temperaturdifferenz zwischen je zwei Temperaturfühlern ermittelt. In Figur 2 sind dazu ein Temperaturfühler 73 am gehäusefesten Bereich 23 und ein Temperaturfühler 74 am gehäusefesten Bereich 23' eingezeichnet (in Figur 6 nicht gezeichnet). Die Steuereinheit 130 kann dann die Heizleistung der beiden Heizwiderstände 11 und 12 so regeln, dass die Temperaturdifferenz zwischen den Temperaturfühlern 73 und 74 einen vorgegebenen Wert einnimmt. Die Größe der Ecklastkorrektur in Richtung links/rechts wird dann in der Steuereinheit nicht als Differenz der Heizleistungen der Heizwiderstände 11 und 12, sondern als Sollwert für die Temperaturdifferenz zwischen den Temperaturfühlern 73 und 74 abgespeichert. Das gleiche gilt für die Ecklastkorrektur in Richtung vorn/hinten, die dann als Sollwert für die Temperaturdifferenz zwischen einem Temperaturfühler 75 am Lastaufnehmer 2 und dem Mittelwert der Temperatur der Temperaturfühler 73 und 74 abgespeichert wird.

Weiter ist in Figur 6 die eigentliche Wägeelektronik 140 zur Ermittlung des Wägewertes und die Anzeige 141 angedeutet. Selbstverständlich kann die Wägeelektronik 140 und die Steuereinheit 130 hardwaremäßig durch denselben Mikroprozessor realisiert sein.

## Patentansprüche

1. Wägeaufnehmer mit einem gehäusefesten Teil und mit einem Lastaufnehmer, der durch eine Parallelführung aus einem oberen Lenker und einem unteren Lenker beweglich mit dem gehäusefesten Teil verbunden ist, **dadurch gekennzeichnet, dass** Heiz- oder Kühlelemente (11, 12, 13, 61, 63, 120, 121) vorhanden sind, die die Temperatur am Lastaufnehmer (2, 52,102) und/oder am gehäusefesten Teil (23, 23', 51, 51', 110) zwischen den Abstützpunkten des oberen (3/ 3', 53, 103) und des unteren Lenkers (4/ 4', 54, 104) gegenüber dem restlichen Wägeaufnehmer lokal verändern und so über den thermischen Ausdehnungskoeffizienten des Materials des Wägeaufnehmers den vertikalen Abstand zwischen oberem und unterem Lenker zur Ecklastjustierung geringfügig verändern.

2. Wägeaufnehmer nach Anspruch 1, **dadurch gekennzeichnet, dass** die Heizoder Kühlelemente (11, 12, 61, 120, 121) am Lastaufnehmer (102) und/oder am gehäusefesten Teil (23, 23', 51, 51', 110) zwischen den Abstützpunkten des oberen und des unteren Lenkers befestigt sind.

3. Wägeaufnehmer nach Anspruch 2, **dadurch gekennzeichnet, dass** die Heizoder Kühlelemente aus elektrischen Widerständen (11, 12, 61, 120, 121), die an eine elektrische Spannung angelegt werden können, bestehen.

4. Wägeaufnehmer nach Anspruch 3, **dadurch gekennzeichnet, dass** die elektrischen Widerstände (11, 12, 61, 120, 121) Folienwiderstände sind.

5. Wägeaufnehmer nach Anspruch 2, **dadurch gekennzeichnet, dass** die Heizoder Kühlelemente aus Peltierelementen (45/46/47) bestehen.

6. Wägeaufnehmer nach Anspruch 5, **dadurch gekennzeichnet, dass** das heizende und das kühlende Ende des Peltierelementes (45/46/47) mit verschiedenen Bereichen des Wägeaufnehmers thermisch leitend verbunden sind.

7. Wägeaufnehmer nach Anspruch 1, **dadurch gekennzeichnet, dass** die Heizoder Kühlelemente aus einer Strahlungsquelle (13, 63) bestehen, die berührungslos Strahlungsenergie auf den Lastaufnehmer (2, 52) und/oder das gehäusefeste Teil (23, 23', 51, 51') zwischen den Abstützpunkten des oberen und des unteren Lenkers überträgt, die dort in Wärme umgewandelt wird.

8. Wägeaufnehmer nach Anspruch 7, **dadurch gekennzeichnet, dass** die Strahlungsquelle (63) in räumlicher Nähe zum Lastaufnehmer (52) oder zum gehäusefesten Teil zwischen den Abstützpunkten des oberen und unteren Lenkers angeordnet ist.

9. Wägeaufnehmer nach Anspruch 7, **dadurch gekennzeichnet, dass** die Strahlungsenergie durch einen Lichtwellenleiter (14) von der Strahlungsquelle (13) zum Lastaufnehmer (2) und/oder zum gehäusefesten Teil zwischen den Abstützpunkten des oberen und des unteren Lenkers übertragen wird.

10. Wägeaufnehmer nach einem der Ansprüche 1 bis 9, **dadurch gekennzeichnet, dass** die Heiz- oder Kühlelemente (11, 12, 13, 61, 63, 120, 121) von einer Steuereinheit (130) angesteuert werden.

11. Wägeaufnehmer nach Anspruch 10, **dadurch gekennzeichnet, dass** in der Steuereinheit (130) Speichermittel für die Größe und ggf. auch für den zeitlichen Verlauf der Heizung bzw. Kühlung vorhanden sind.

12. Wägeaufnehmer nach Anspruch 11 mit einem Temperaturfühler (71) am Wägeaufnehmer zur Messung der Umgebungstemperatur, **dadurch gekennzeichnet, dass** die Größe und/oder der zeitliche Verlauf der Heizung bzw. Kühlung in Abhängigkeit vom Signal dieses Temperaturfühlers (71) angepasst wird.

13. Wägeaufnehmer nach Anspruch 10, **dadurch gekennzeichnet, dass** am Lastaufnehmer (2) und/oder am gehäusefesten Teil (23, 23') zwischen den Abstützpunkten des oberen und den unteren Lenkers zusätzlich zu den Heiz- oder Kühlelementen (11,12,13) mindestens zwei Temperaturfühler (73, 74, 75) angebracht sind und dass die Heiz- oder Kühlelemente von der Steuereinheit (130) so angesteuert werden, dass die Temperaturdifferenz zwischen den Temperaturfühlern einen vorgegebenen Wert annimmt.

14. Wägeaufnehmer nach Anspruch 13, **dadurch gekennzeichnet, dass** in der Steuereinheit (130) Speichermittel für die Größe der einzuhaltenden Temperaturdifferenz vorhanden sind.

## Claims

1. Weight sensor with a part, which is fixed relative to a housing, and with a load receiver, which is movably connected, by a parallel guide consisting of an upper guide arm and a lower guide arm, with the part fixed relative to the housing, **characterised in that** heating or cooling elements (11, 12, 13, 61, 63, 120, 121) are present, which locally change the temperature, relative to the rest of the weight sensor, at the load receiver (2, 52, 102) and/or at the part (23, 23', 51, 51', 110), which is fixed relative to the housing, between the support points of the upper guide arm (3/3', 53, 103) and the lower guide arm (4/4', 54, 104) and thus slightly change by way of the thermal coefficient of expansion of the material of the weight sensor the vertical spacing between the upper guide arm and lower guide arm for corner load adjustment.

2. Weight sensor according to claim 1, **characterised in that** the heating or cooling elements (11, 12, 61, 120, 121) at the load receiver (102) and/or at the part (23, 23', 51, 51', 110) fixed relative to the housing are fastened between the support points of the upper guide arm and the lower guide arm.

3. Weight sensor according to claim 2, **characterised in that** the heating or cooling elements consist of electrical resistances (11, 12, 61, 120, 121) to which an electrical voltage can be applied.

4. Weight sensor according to claim 3, **characterised in that** the electrical resistances (11, 12, 61, 120, 121) are film resistances.

5. Weight sensor according to claim 2, **characterised in that** the heating or cooling elements consist of Peltier elements (45/46/47).

6. Weight sensor according to claim 5, **characterised in that** the heating end and the cooling end of the Peltier element (45, 46, 47) are thermally conductively connected with different regions of the weight sensor.

7. Weight sensor according to claim 1, **characterised in that** the heating or cooling elements consist of a radiation source (13, 63) which contactlessly transfers radiation energy to the load receiver (2, 52) and/or the part (23, 23', 51, 51'), which is fixed relative to the housing, between the supports points of the upper guide arm and the lower guide arm, which energy is there converted into heat.

8. Weight sensor according to claim 7, **characterised in that** the radiation source (63) is arranged in spatial proximity to the load receiver (52) or the part, which is fixed relative to the housing, between the support points of the upper guide arm and the lower guide arm.

9. Weight sensor according to claim 7, **characterised in that** the radiation energy is transferred by an optical waveguide (14) from the radiation source (13) to the load receiver (2) and/or to the part, which is fixed relative to the housing, between the support points of the upper guide arm and the lower guide arm.

10. Weight sensor according to one of claims 1 to 9, **characterised in that** the heating or cooling elements (11, 12, 13, 61, 63, 120, 121) are controlled in drive by a control unit (130).

11. Weight sensor according to claim 1, **characterised in that** storage means for the magnitude and optionally also for the course over time of the heating or cooling are present in the control unit (130).

12. Weight sensor according to claim 11 with a temperature detector (71) at the weight sensor for measuring the ambient temperature, **characterised in that** the magnitude and/or the course over time of the heating or cooling is adapted in dependence on the signal of this temperature detector (71).

13. Weight sensor according to claim 10, **characterised in that** additionally to the heating or cooling elements (11, 12, 13) at least two temperature detectors (73, 74, 75) are mounted at the load receiver (2) and/or at the part (23, 23'), which is fixed relative to the housing, between the support points of the upper guide arm and the lower guide arm and that the heating or cooling elements are so controlled in drive by the control unit (130) that the temperature difference between the temperature detectors adopts a predetermined value.

14. Weight sensor according to claim 13, **characterised in that** storage means for the magnitude of the temperature difference to be maintained are present in the control unit (130).

## Revendications

1. Capteur de pesée comprenant une partie fixée au boîtier et comprenant un capteur de charge, qui est relié à la partie fixée au boîtier par un guidage parallèle constitué d'un bras supérieur et d'un bras inférieur, **caractérisé en ce que** des éléments de chauffage ou de refroidissement (11, 12, 13, 61, 63, 120, 121) sont présents, qui modifient localement la température sur le capteur de charge (2, 52, 102) et/ou sur la partie fixée au boîtier (23, 23', 51, 51', 110) entre les points d'appui des bras supérieur (3/3', 53, 103) et inférieur (4/4', 54, 104) par rapport au reste du capteur de pesée et modifient ainsi légèrement, par l'intermédiaire des coefficients de dilatation thermique du matériau du capteur de pesée, la distance verticale entre les bras supérieur et inférieur en vue d'une régulation de charge de coin.

2. Capteur de pesée selon la revendication 1, **caractérisé en ce que** les éléments de chauffage ou de refroidissement (11, 12, 61, 120, 121) sont fixés sur le capteur de charge (102) et/ou sur la partie fixée au boîtier (23, 23', 51, 51', 110) entre les points d'appui des bras supérieur et inférieur.

3. Capteur de pesée selon la revendication 2, **caractérisé en ce que** les éléments de chauffage ou de refroidissement sont constitués de résistances électriques (11, 12, 61, 120, 121), auxquelles peut être appliquée une tension électrique.

4. Capteur de pesée selon la revendication 3, **caractérisé en ce que** les résistances électriques (11, 12, 61, 120, 121) sont des résistances sous forme de films.

5. Capteur de pesée selon la revendication 2, **caractérisé en ce que** les éléments de chauffage ou de refroidissement sont constitués d'éléments Peltier (45/46/47).

6. Capteur de pesée selon la revendication 5, **caractérisé en ce que** les extrémités de chauffage et de refroidissement de l'élément Peltier (45/46/47) sont reliées à différentes zones du capteur de pesée par conductivité thermique.

7. Capteur de pesée selon la revendication 1, **caractérisé en ce que** les éléments de chauffage ou de refroidissement sont constitués d'une source de rayonnement (13, 63), qui transmet sans contact une énergie de rayonnement au capteur de charge (2, 52) et/ou à la partie fixée au boîtier (23, 23', 51, 51') entre les points d'appui des bras supérieur et inférieur, laquelle énergie est convertie en chaleur à cet endroit.

8. Capteur de pesée selon la revendication 7, **caractérisé en ce que** la source de rayonnement (63) est disposée à proximité spatiale par rapport au capteur de charge (52) ou par rapport à la partie fixée au boîtier entre les points d'appui des bras supérieur et inférieur.

9. Capteur de pesée selon la revendication 7, **caractérisé en ce que** l'énergie de rayonnement est transmise par un câble à fibres optiques (14) de la source de rayonnement (13) au capteur de charge (2) et/ou à la partie fixée au boîtier entre les points d'appui des bras supérieur et inférieur.

10. Capteur de pesée selon l'une des revendications 1 à 9, **caractérisé en ce que** les éléments de chauffage ou de refroidissement (11, 12, 13, 61, 63, 120, 121) sont commandés par une unité de commande (130).

11. Capteur de pesée selon la revendication 10, **caractérisé en ce que** des moyens de mémorisation pour l'ampleur et éventuellement également pour la variation temporelle du chauffage et/ou du refroidissement sont présents dans l'unité de commande (130).

12. Capteur de pesée selon la revendication 11 comprenant un capteur de température (71) sur le capteur de pesée destiné à mesurer la température ambiante, **caractérisé en ce que** l'ampleur et/ou la variation temporelle du chauffage et/ou du refroidissement sont adaptés en fonction du signal de ce capteur de température (71).

13. Capteur de pesée selon la revendication 10, **caractérisé en ce qu'**au moins deux capteurs de température (73, 74, 75) sont aménagés sur le capteur de charge (2) et/ou sur la partie fixée au boîtier (23, 23') entre les points d'appui des bras supérieur et inférieur en plus des éléments de chauffage ou de refroidissement (11, 12, 13) et **en ce que** les éléments de chauffage ou de refroidissement sont commandés par l'unité de commande (130), de sorte que la différence de température entre les capteurs de température prend une valeur prédéterminée.

14. Capteur de pesée selon la revendication 13, **caractérisé en ce que** des moyens de mémorisation pour la valeur de la différence de température à maintenir sont présents dans l'unité de commande (130).
